# EUROPEAN PATENT SPECIFICATION

(11) **EP 2 735 497 B1**
(45) Date of publication and mention of the grant of the patent: **12.08.2015**
(21) Application number: 13460074.1
(22) Date of filing: 14.11.2013
(51) Int. Cl.: B62D 57/02

(54) **Tossed two-wheeled robot stabilizer**
Kippstabilisator für zweirädrigen Roboter
Stabilisateur de robot à deux roues lancées

(30) Priority: 22.11.2012 PL 40173012
(43) Date of publication of application: 28.05.2014
(73) Proprietor: Przemyslowy Instytut Automatyki i Pomiarow PIAP, 02-486 Warszawa (PL)
(72) Inventor: Dudek, Lukasz, 01-318 Warszawa (PL)

(56) References cited:
- US-A1- 2009 124 164
- US-A1- 2010 152 922
- US-A1- 2012 137 862
- US-A1- 2012 273 284
- US-B1- 6 902 464

## Description

The invention relates to a throwable two-wheeled mobile robot stabilizer.

From Polish Patent Application No. PL 210815 is known a two-wheeled mobile robot designed to penetrate and observe restricted access areas. This robot is equipped with a support connected with a main body which protects the mechanism of the robot from damage during a fall. The support has at its end a weight, which to some extend stabilizes the robot. However, it hinders the movement of the robot on an uneven ground. Documents US 2012/0137862 A1, US 2010/0152922 A1 and US 2009/0124164 A1 disclose other two-wheeled mobile robots having a stabilizer.

The aim of this invention is to develop a two-wheeled mobile robot stabilizer, which protects the robot mechanism during the fall as well as allows a movement of the robot in areas with uneven surfaces.

The essence of the invention consists in a two-wheeled mobile robot stabilizer composed of two rubber ballasts connected to a robot frame and disposed symmetrically in relation to a median plane orthogonal to a robot wheel axis and of a rubber roller set rotatable on a shaft embedded in holes at the ends of ballast, the ballasts having radial cuts designed for attachment to the robot frame.

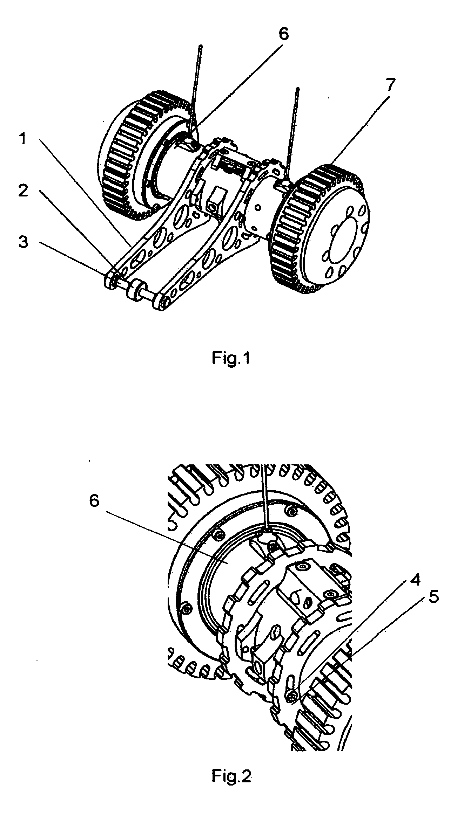

The subject of invention is shown on the following figures, in which fig.1 presents a tossed two-wheeled robot stabilizer in perspective view, and fig.2 a ballast mounting to the robot frame in perspective view.

The two-wheeled mobile robot stabilizer is composed of two rubber ballasts (1) connected to a robot frame (6) and disposed symmetrically in relation to a median plane orthogonal to a robot wheel axis (7) and of a rubber roller (2) set rotatable on a shaft (3) embedded in holes at the ends of ballast (1). Each ballast (1) has radial cuts (4) designed for attachment to robot the frame (6). Attachment is possible using screws (5). During movement of the robot the rubber roller (2) rolls on the surface on which the robot moves, what can significantly reduce friction and noise generated by the robot During movement and fall from a great height. The stabilizer prevents from rotation of the two-wheeled robot around its own axis, what allows it to move forward. Roller (2) and shaft (3) are also counterweight to the robot when it moves backwards. The rubber stabilizer has also the additional role of protecting a central part of the robot frame from being damaged as a result of a fall on an edge or on other obstacle, which fall cannot be cushioned by the robot wheels. The equipment of the ballast (1) with radical cuts (4) allows to mount them to the robot frame (6) in different positions, what allows to change the observation angle of a camera installed in the robot frame (6). The cuts (4), in addition to their control function, perform other tasks like cushioning, increasing susceptibility of the rubber ballast (1). The stabilizer of the invention provides great flexibility and amortization in case of fall of the robot from a great height. However, it has sufficient rigidity to lock robot rotation on its axis allow to move in all directions. The use of rubber components as ballast for the two-wheeled robot has increased the durability and simplicity of the stabilizer construction. The rubber stabilizer is more resistant in comparison to other similar metal stabilizers, in which sensibility has been obtained by using a steel cord.

## Claims

1. A two-wheeled mobile robot stabilizer composed of two rubber ballasts (1) connected to a robot frame (6) and disposed symmetrically in relation to a median plane orthogonal to a robot wheel axis (7) and of a rubber roller (2) set rotatable on a shaft (3) embedded in holes at the ends of the ballasts (1), each ballast (1) having radial cuts (4) designed for attachment to the robot frame (6).

## Patentansprüche

1. Ein Stabilisator des zweirädrigen beweglichen Roboters, der aus zwei Stabilisatoren aus Gummi (1) besteht, welche Stabilisatoren mit dem Körper des Roboters verbunden sind und symmetrisch im Bezug auf die Mittelebene angeordnet sind, welche Mittelebene rechtwinklig zur Roboter-Räderachse (7) liegt, und aus der Gummirolle (2) besteht, die rotierend auf der Welle (3) montiert ist, wobei diese Welle in den Öffnungen an den Enden der Stabilisatoren (1) eingelagert ist, und wobei jeder Stabilisator mit radialen Ausschnitten (4) für Befestigung an den Roboter-Rahmen (6) versehen ist.

## Revendications

1. Stabilisateur de robot mobile à deux roues, composé de deux lests (1) en caoutchouc reliés au corps (6) du robot et répartis symétriquement par rapport au plan médian perpendiculaire à l'essieu (7) des roues du robot et d'un jeu de rouleaux (2) en caoutchouc, pivotant sur l'arbre (3) fixé dans des orifices aux extrémités des lests (1), chaque lest (1) comportant des orifices radiaux (4) destinés à la fixation au corps (6) du robot.
